**Europäisches Patentamt**

**European Patent Office**

**Office européen des brevets**

(19)

(11) Veröffentlichungsnummer : **0 028 863**
**B1**

# EUROPÄISCHE PATENTSCHRIFT

(12)

(45) Veröffentlichungstag der Patentschrift :
24.08.83

(21) Anmeldenummer : **80201056.1**

(22) Anmeldetag : **07.11.80**

(51) Int. Cl.³ : **H 05 K 11/02**, G 12 B 9/00,
G 01 D 11/30

(54) **Vorrichtung zum Befestigen eines elektrischen Gerätes an einem Durchbruch eines Kraftfahrzeugteiles.**

(30) Priorität : **07.11.79 DE 2944862**

(43) Veröffentlichungstag der Anmeldung :
**20.05.81 Patentblatt 81/20**

(45) Bekanntmachung des Hinweises auf die Patenterteilung : **24.08.83 Patentblatt 83/34**

(84) Benannte Vertragsstaaten :
**DE FR GB IT**

(56) Entgegenhaltungen :
**DE B 2 406 749**
**FR A 2 365 273**
**FR A 2 447 299**
**US A 4 169 624**

(73) Patentinhaber : **Philips Patentverwaltung GmbH**
**Steindamm 94**
**D-2000 Hamburg 1 (DE)**
**DE**
**N.V. Philips' Gloeilampenfabrieken**
**Groenewoudseweg 1**
**NL-5621 BA Eindhoven (NL)**
**FR GB IT**

(72) Erfinder : **Krainhöfer, Günter**
**Egerlandstrasse 13**
**D-6336 Solms (DE)**

(74) Vertreter : **Kupfermann, Fritz-Joachim, Dipl.-Ing. et al**
**Steindamm 94**
**D-2000 Hamburg 1 (DE)**

Vorrichtung zum Befestigen eines elektrischen Gerätes an einem Durchbruch eines Kraftfahrzeugteiles

Die Erfindung bezieht sich auf eine Vorrichtung zum Befestigen eines elektrischen Gerätes, insbesondere eines Autoradios oder Autokassettenrecorders, an einem Durchbruch eines Kraftfahrzeugteiles, wie einer Armaturentafel, wobei das elektrische Gerät mit von seiner Vorderseite her verstellbaren Befestigungsteilen versehen ist.

In den Armaturenbrettern oder Armaturenkonsolen von Kraftwagen sind üblicherweise Durchbrüche vorgesehen, in welche Autoradios oder Autokassettenrecorder eingeschoben werden können. Zur Befestigung dienen dabei beispielsweise mit seitlichen Federstücken versehene Rahmen, die durch Verschrauben an den vorstehenden Stellwellen befestigt werden (DE-AS 24 06 749).

Weiterhin ist es aus der US-PS 4 169 624 bekannt, von der Frontseite eines Autoradios her eine Stellschraube bis hinter das Armaturenbrett zu führen, auf der ein Mutterstück aufsitzt, an dem Befestigungsstreben angelenkt sind. Beim Verdrehen der Befestigungsschraube können sich die Befestigungsstreben an die Rückseite des Armaturenbrettes anlagen und das Autoradio damit durch ein Einspannen zwischen der Vorder- und Rückseite des Armaturenbrettes im Fahrzeug festklemmen.

Es ist Aufgabe der Erfindung, eine Vorrichtung zum Befestigen eines elektrischen Gerätes, insbesondere eines Autoradios oder Autokassettenrecorders, zu schaffen, bei der die Befestigung im Durchbruch einer Armaturentafel selbst möglich ist, um damit in der Tiefe mehr Freiraum zu bekommen.

Die gestellte Aufgabe ist bei einer Vorrichtung der eingangs erwähnten Art dadurch gelöst, daß gemäß der Erfindung die Befestigungsteile das Gerät an der den Durchbruch begrenzenden Kante festklemmen und eine zentrale Stellvorrichtung die Befestigungsteile in entgegengesetzter Richtung gegen einander gegenüber befindliche Kantenabschnitte des Durchbruches preßt.

Bei der Befestigungsvorrichtung nach der Erfindung besteht eine größere Toleranzbreite in den Durchbruchabmessungen. Die größere Toleranzbreite wird mit den verstellbaren Befestigungsteilen überdeckt.

Nach einer weiteren Ausgestaltung der Erfindung besteht die zentrale Stellvorrichtung aus einer Stellschraube und einem auf ihrem Gewinde aufsitzenden Mutterstück, an das zu einander gegenüber befindlichen Abschnitten der langen Kanten geführte Befestigungsstreben derart winklig zueinander angelenkt sind, daß sich ihre freien Enden unter Vergrößerung des eingeschlossenen Winkels in der Klemmlage gegen Abschnitte der langen Kanten pressen. Das Festklemmen erfolgt bei dieser Ausführungsform durch das Auseinanderspreizen der Befestigungsstreben.

Wenn eine derartige Spreizvorrichtung zu aufwendig ist, dann kann auch mit Keilflächen gearbeitet werden, welche die Befestigungsteile verstellen. Die Keilverstellung kann dabei derart ausgeführt sein, daß die zentrale Stellvorrichtung aus einer Stellschraube und einem auf ihrem Gewinde aufsitzenden Mutterstück besteht, welches keilförmige Auflaufflächen für die gegen einander gegenüber befindlichen Abschnitte der langen und/oder kurzen Kanten führbaren Befestigungsteile aufweist. Dabei können die Befestigungsteile senkrecht zu den Abschnitten der langen Kanten verschiebbare Stege sein, die zu den keilförmigen Auflaufflächen komplementäre keilförmige Auflaufflächen aufweisen.

Wenn eine Schiebeführung für die Stege unwillkommen ist, dann kann die Vorrichtung nach einer weiteren Ausgestaltung der Erfindung derart aufgebaut sein, daß beiderseits der Stellschraube als Klemmkeile ausgebildete Befestigungsteile vorgesehen sind, die um eine in Richtung der kurzen Kante verlaufende Achse verschwenkbar sind, und daß nebeneinander befindliche keilförmige Auflaufflächen an dem Mutterstück mit entsprechend nebeneinander angeordneten komplementären keilförmigen Auflaufflächen an den einzelnen Befestigungsteilen zusammenwirken, wobei das mittels der Stellschraube verschiebbare Mutterstück die Befestigungsteile in der Klemmlage gegen die Abschnitte der kurzen Kanten preßt. Die als Klemmkeile ausgebildeten Befestigungsteile sind dabei über Materialverdünnungen oder sogenannte Filmgelenke mit dem Gerätegehäuse verbunden. Diese Ausführungsform ohne Gelenke oder dergl. läßt sich durch Kunststoffspritzen verwirklichen.

Die bisher beschriebenen Befestigungsvorrichtungen gehen davon aus, daß die Befestigungsteile senkrecht zueinander in entgegengesetzten Richtungen gegen Kanten des Durchbruchs gepreßt werden. Es ist jedoch auch möglich, in den Ecken des Durchbruches immer jeweils gegen die zusammenstoßenden Kanten zu drücken. Eine derartige Weiterbildung der Erfindung ist dadurch gekennzeichnet, daß wenigstens einer der als Klemmkeile ausgebildeten Befestigungsteile um eine in Richtung der kurzen Kante und wenigstens ein weiteres Befestigungsteil um eine in Richtung der langen Kante verlaufende Achse verschwenkbar ist und daß keilförmige Auflaufflächen des Mutterstückes komplementäre keilförmige Auflaufflächen der Befestigungsteile derart beaufschlagen, daß die Befestigungsteile senkrecht zueinander in wenigstens zwei Ecken des Durchbruchs gegen die kurze bzw. die lange Kante drücken. In diesem Fall wird das Gerät also in den Ecken des Durchbruches festgelegt.

Die Erfindung wird anhand der in den Zeichnungen dargestellten Ausführungsbeispiele näher erläutert. Es zeigen:

Figur 1 ein Autoradio in schaubildlicher Darstellung mit einer Vorrichtung zu seiner Befestigung in einer Armaturentafel, wobei die Vorrichtung durch teilweises Aufschneiden des Gehäuses freigelegt dargestellt ist,

Figur 2 ein Autoradio mit einer abgewandelten freigelegten Befestigungsvorrichtung,

Figur 3 ein schaubildliches Autoradio mit einer weiteren Abwandlung der Befestigungsvorrichtung,

Figur 3a die Befestigungsvorrichtung nach Fig. 3 in Explosionsdarstellung,

Figur 4 eine weitere Ausführungsform der Befestigungsvorrichtung und

Figur 4a eine Explosionsansicht der Befestigungsvorrichtung nach Fig. 4.

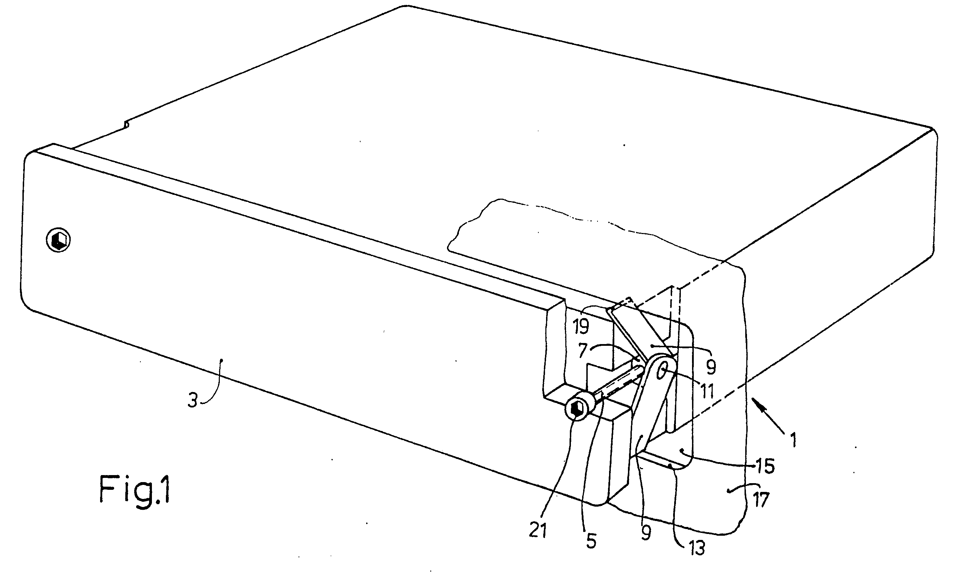

Das in Fig. 1 dargestellte Autoradio 1 ist mit einer vorderen Abschlußblende 3 versehen, durch die keine Stellwellen bisheriger Art hindurchgreifen. Es ist allerdings auch möglich, die Stellwellen, wie bisher, durch die Abschlußblende 3 hindurchreichen zu lassen, ohne daß sich dadurch an der Befestigungsvorrichtung nach der Erfindung etwas ändert.

Die Vorrichtung zur Befestigung des Autoradios 1 besteht aus einer Stellvorrichtung, die aus einer von der Vorderseite der Abschlußblende 3 bedienbaren Schraube 5, einem auf der Schraube 5 aufsitzenden Mutterstück 7 und zwei Befestigungsteilen 9 besteht. Diese Befestigungsteile sind an dem Mutterstück 7 um eine Gelenkachse 11 verschwenkbar angeordnet.

In der Klemmlage ist das Mutterstück 7 durch Verdrehen der Schraube 5 nach vorn gezogen, wodurch sich die beiden Befestigungsteile 9 unter Vergrößerung des von ihnen eingeschlossenen Winkels gegen die Kante 13 eines Durchbruches 15 in einer Armaturentafel 17 pressen. Die Befestigungsteile 9 sind in diesem Fall als Flachmetallstreben ausgebildet. Ihre Preßflächen 19 sind so gestaltet, daß sie an der Kante 13 nicht abrutschen können. Dies kann beispielsweise durch ein Aufrauhen oder Zahnen erfolgen.

Soll die Vorrichtung nach Fig. 1 zum Entnehmen des Autoradios wieder gelöst werden, dann wird durch Einstecken eines Schlüssels in den Schraubenkopf 21 und Drehen der Schraube 5 das Mutterstück 7 wieder nach hinten bewegt, wobei sich die Befestigungsteile 9 unter Verkleinerung des von ihnen eingeschlossenen Winkels aufeinander zu bewegen und von der Kante lösen.

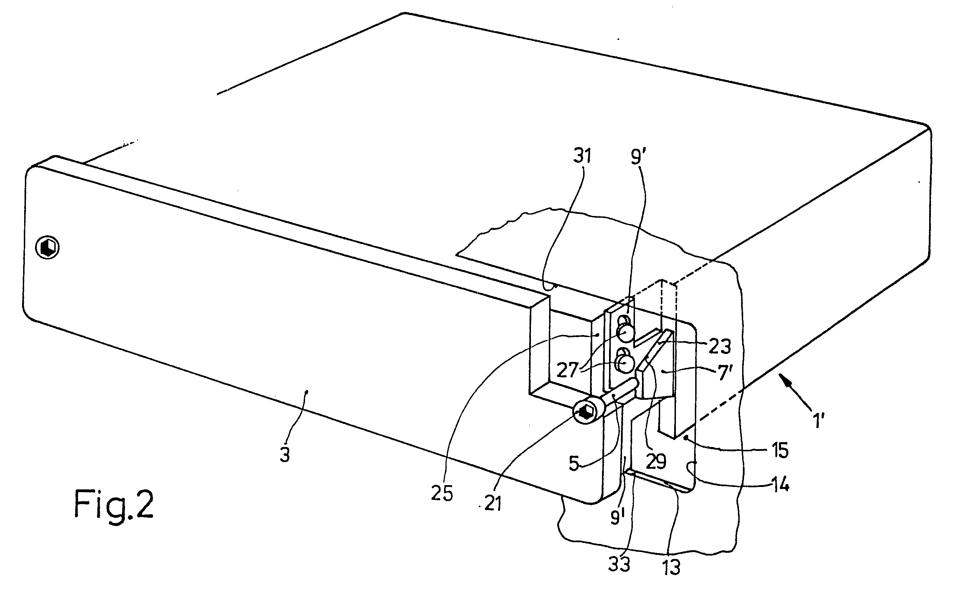

Bei dem in Fig. 2 dargestellten Ausführungsbeispiel sitzt auf der Schraube 5 ein Mutterstück 7' auf. Dieses Mutterstück 7' ist mit in Richtung auf den Schraubenkopf 21 keilförmig zulaufenden Auflaufflächen 23 versehen. Die strebförmigen Befestigungsteile 9' bestehen in diesem Fall wieder aus Flachmaterial und sind an einer Gehäusewand 25 mittels Nietköpfen 27 in entgegengesetzter Richtung verschiebbar gehalten. Außerdem sind die Befestigungsteile 9' mit zu den Auflaufflächen 23 des Mutterstückes 7' komplementären Auflaufflächen 29 versehen. Zum Zwecke der Festlegung des Autoradios 1' in dem Durchbruch 15 wird die Schraube 5 derart gedreht, daß das Mutterstück 7' auf den Schraubenkopf 21 zu bewegt wird. Dadurch werden die Befestigungsteile 9' in entgegengesetzter Richtung gegen gegenüber befindliche Abschnitte 31, 33 der Durchbruchkante 13 gepreßt. Da der Durchbruch 15 aus jeweils aneinander anschließenden kurzen Kanten 14 und langen Kanten 13 besteht, befinden sich die Kantenabschnitte 31 und 33 bei dem Ausführungsbeispiel nach Fig. 1 und 2 an den langen Kanten 13.

Das erneute Lösen des Autoradios 1' nach Fig. 2 aus der Klemmlage erfolgt durch ein Zurückschrauben des Mutterstückes 7', welches ein Aufeinanderzubewegen der Befestigungsteile 9' zur Folge hat. Das Aufeinanderzubewegen kann mit Hilfe von nicht näher angedeuteten Spannfedern erfolgen.

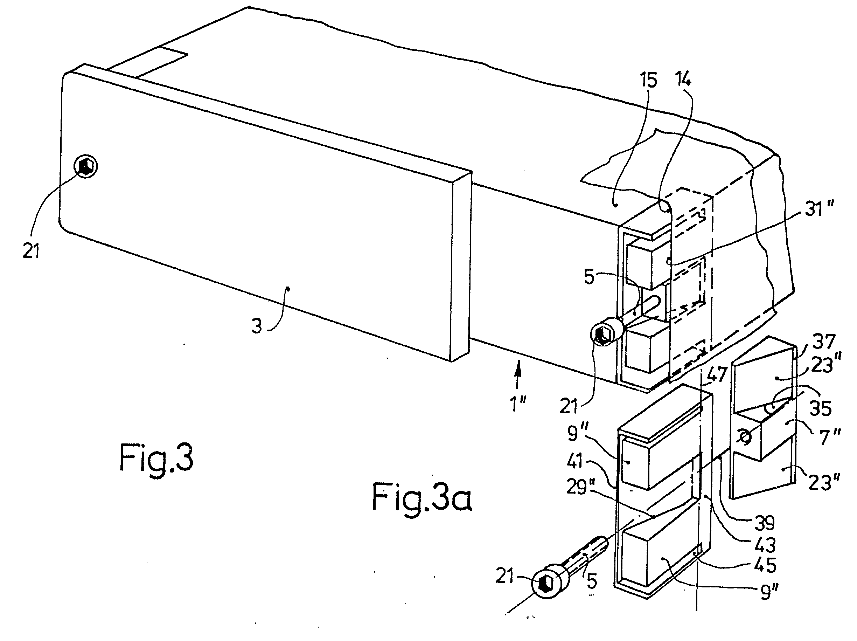

Bei der Ausführungsform nach Fig. 3 ist ein Autoradio 1'' mit einer anderen Ausführungsform der Befestigungsvorrichtung ausgerüstet. Die Befestigungsvorrichtung besteht in diesem Fall wieder aus an gegenüberliegenden Randteilen der Abschlußblende 3 angeordneten Stellschrauben 5 mit Schraubenköpfen 21. Auf jeder Stellschraube 5 sitzt, wie aus Fig. 3a deutlich zu erkennen ist, ein Mutterstück 7'' auf, welches auf der Schraube 5 vor- und zurückverschiebbar ist. Das Mutterstück 7'' weist parallel nebeneinander liegende keilförmige Auflaufflächen 23'' auf, die mit der Drehachse der Schraube 5 einen Winkel 35 einschließen. Die Keilfläche 23'' strebt dabei von der vom Schraubenkopf 21 abgelegenen Endkante 37 von der Achse 39 der Schraube 5 weg, und zwar in Richtung auf die Gerätemitte.

In einem Rahmenteil 41, welches zur Befestigungsvorrichtung nach Fig. 3 gehört und aus Kunststoff gespritzt ist, befinden sich keilförmige Befestigungsteile 9''. Diese keilförmigen Befestigungsteile sind durch das Anbringen von Querschnittsverminderungen an der vom Schraubenkopf 21 abgelegenen Rückseite 43 mit einer Art Kunststoffgelenk oder Filmscharnier 45 versehen, welche ein Schwenken der Befestigungsteile 9'' um eine Achse 47 ermöglichen. Die Befestigungsteile 9'' sind mit zu den Keilflächen 23'' komplementären Keilflächen 29'' versehen.

Wird das Mutterstück 7'' durch Drehen der Schraube 5 in Richtung auf den Schraubenkopf 21 gezogen, dann schwenken die Befestigungsteile 9'' um die Achse 47 und pressen sich schließlich gegen den Abschnitt 31'' der kurzen Durchbruchkante 14. Indem die Befestigungsvorrichtungen beiderseits des Autoradios über beide Schrauben 5 angezogen werden, verklemmt sich das Autoradio in dem Durchbruch 15 zwischen den kurzen Durchbruchkanten 14. Zum Lösen aus Klemmlage brauchen die Schrauben 5 nur in der Gegenrichtung gedreht zu werden.

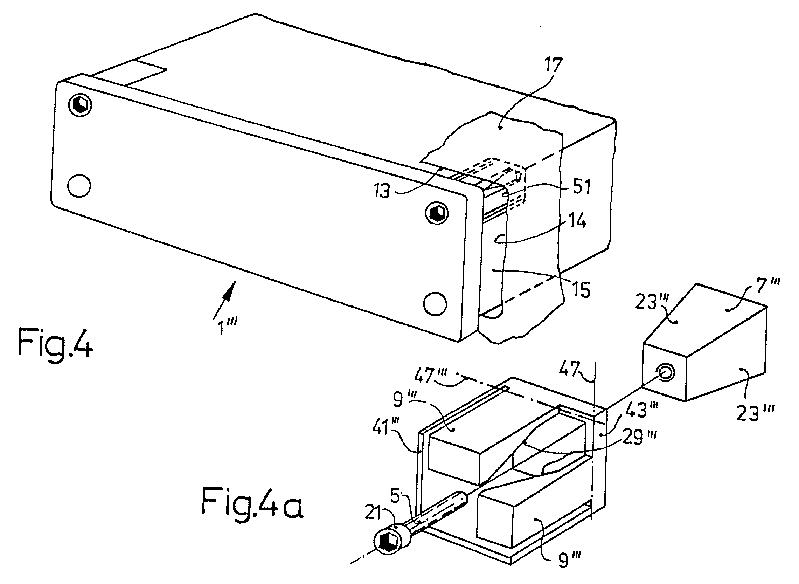

Bei der Ausführungsform nach Fig. 4 erfolgt das Verklemmen des Autoradios in den Ecken 51 des Durchbruchs 15, wo die kurzen und langen Kanten zusammenstoßen. Genaue Einzelheiten dieser Befestigungsvorrichtung sind aus Fig. 4a zu erkennen. Auf der Schraube 5 mit ihrem Schraubenkopf 21 sitzt ein Mutterstück 7'''.

Dieses Mutterstück 7''' hat die Form eines Pyramidenstumpfes. Dadurch entstehen keilförmige Auflaufflächen 23''', die einen rechten Winkel miteinander einschließen. Wie in Fig. 3 sind die Befestigungsteile 9''' an dem Rahmen 41''' angeordnet, der aus Kunststoff gefertigt ist. An der Hinterseite 43''' sind die Befestigungsteile 9''' um Achsen 47 und 47''' verschwenkbar angeordnet. Die Achse 47 und 47''' schließen dabei einen Winkel miteinander ein. Dadurch sind die keilförmigen Auflaufflächen 29''' komplementär zu den Auflaufflächen 23''' des Mutterstücks 7''' angeordnet.

Um das Autoradio 1''' in der Armaturentafel 17 festklemmen zu können, wird das Mutterstück 7''' mittels der Schraube 5 in Richtung auf den Schraubenkopf verschoben. Dabei spreizen sich die Befestigungsteile 9''' in senkrecht zueinander liegenden Richtungen nach außen und drücken im Bereich der Durchbruchsecke 51 sowohl gegen die lange Kante 13 als auch die kurze Kante 14.

Durch die Anordnung von vier derartigen Befestigungsvorrichtungen ist das Gerät besonders sicher in dem Durchbruch 15 festgelegt.

**Ansprüche**

1. Vorrichtung zum Befestigen eines elektrischen Gerätes, insbesondere eines Autoradios oder Autokassettenrecorders, an einem Durchbruch eines Kraftfahrzeugteiles, wie einer Armaturentafel, wobei das elektrische Gerät mit von seiner Vorderseite her verstellbaren Befestigungsteilen versehen ist, dadurch gekennzeichnet, daß die Befestigungsteile (9) das Gerät an der den Durchbruch (15) begrenzenden Kante (13, 14) festklemmen und eine zentrale Stellvorrichtung die Befestigungsteile (9) in entgegengesetzter Richtung gegen einander gegenüber befindliche Kantenabschnitte (13, 31) des Durchbruches (15) preßt.

2. Vorrichtung nach Anspruch 1 für einen Durchbruch mit je zwei parallelen kurzen und langen Kanten, dadurch gekennzeichnet, daß die zentrale Stellvorrichtung aus einer Stellschraube (5) und einem auf ihrem Gewinde aufsitzenden Mutterstück (7) besteht, an das zu einander gegenüber befindlichen Abschnitten der langen Kanten geführte Befestigungsstreben (9) derart winklig zueinander angelenkt sind, daß sich ihre Enden (19) unter Vergrößerung des eingeschlossenen Winkels in der Klemmlage gegen Abschnitte (31, 33) der langen Kanten (13) pressen (Fig. 1).

3. Vorrichtung nach Anspruch 1 mit je zwei parallelen kurzen und langen Kanten, dadurch gekennzeichnet, daß die zentrale Stellvorrichtung aus einer Stellschraube (5) und einem auf ihrem Gewinde aufsitzenden Mutterstück (7') besteht, welches keilförmige Auflaufflächen (23) für die gegen einander gegenüber befindlichen Abschnitte (13) der langen und/oder kurzen Kanten führbaren Befestigungsteile (9, 9'') aufweist (Fig. 2 und 3).

4. Vorrichtung nach Anspruch 3, dadurch gekennzeichnet, daß die Befestigungsteile (9') senkrecht zu den Abschnitten (31, 33) der langen Kanten (13) verschiebbare Stege (9') sind, die zu den keilförmigen Auflaufflächen (23) komplementäre keilförmige Auflaufflächen (29) aufweisen (Fig. 2).

5. Vorrichtung nach Anspruch 3, dadurch gekennzeichnet, daß beiderseits der Stellschraube (5) als Klemmkeile ausgebildete Befestigungsteile (9'') vorgesehen sind, die um eine in Richtung der kurzen Kante (14) verlaufende Achse (47) verschwenkbar sind, und daß nebeneinander befindliche keilförmige Auflaufflächen (23'') an dem Mutterstück (7'') mit entsprechend nebeneinander angeordneten komplementären keilförmigen Auflaufflächen (29'') an den einzelnen Befestigungsteilen (9'') zusammenwirken, wobei das mittels der Stellschraube (5) verschiebbare Mutterstück (7'') die Befestigungsteile (9'') in der Klemmlage gegen die Abschnitte (31', 33') der kurzen Kanten (14) preßt (Fig. 3).

6. Abwandlung der Vorrichtung nach Anspruch 3, dadurch gekennzeichnet, daß wenigstens eines der als Klemmkeile ausgebildeten Befestigungsteile (9''') um eine in Richtung der kurzen Kante (14) und wenigstens ein weiteres Befestigungsteil (9''') um eine in Richtung der langen Kante verlaufende Achse (47, 47''') verschwenkbar ist und daß keilförmige Auflaufflächen (23''') des Mutterstückes (7''') komplementäre keilförmige Auflaufflächen (29''') der Befestigungsteile (9''') derart beaufschlagen, daß die Befestigungsteile (9''') senkrecht zueinander in wenigstens zwei Ecken (51) des Durchbruches (15) gegen die kurze (14) bzw. die lange (13) Kante drücken (Fig. 4).

**Claims**

1. A device for mounting an electrical appliance, notably a car radio or car cassette recorder, in an opening of a part of a motor vehicle such as a dashboard, said appliance comprising fixing parts which can be adjusted from the front side of the appliance, characterized in that the fixing parts (9) clamp the appliance onto the edges (13, 14) which bound the opening (15), a central adjusting device pressing the fixing parts (9) in opposite directions against oppositely situated edge portions (13, 31) of the opening (15).

2. A device as claimed in Claim 1 for an opening which comprises two parallel shorter edges and two parallel longer edges, characterized in that the central adjusting device consists of an adjusting screw (5) and a nut portion (7) which is accommodated on the thread of the screw and on which fixing strips (9) which are guided on oppositely situated portions of the longer edges are pivoted with respect to each other at an angle such that their ends (19) press against portions (31, 33) of the longer edges (13) with an increased enclosed angle in the clamping position (Figure 1).

3. A device as claimed in Claim 1, comprising two parallel shorter edges and two parallel longer edges, characterized in that the central adjusting device consists of an adjusting screw (5) and a nut portion (7') which is accommodated on its thread and which comprises first wedge-like ramp surface (23) for the fixing parts (9, 9'') which can be guided on oppositely situated portions (13) of the longer and/or shorter edges (Figures 2 and 3).

4. A device as claimed in Claim 3, characterized in that the fixing parts (9') are arms (9') which are slidable perpendicularly to the portions (31, 33) of the longer edges (13) and which comprise second wedge-like ramp surfaces (29) which are complementary to the first wedge-like ramp surfaces (23) (Figure 2).

5. A device as claimed in Claim 3, characterized in that on either side of the adjusting screw (5) there are provided fixing parts (9'') which are constructed as clamping wedges and which are pivotable about an axis (47) which extends in the direction of the shorter edge (14), adjacently situated first wedge-like ramp surfaces (23'') on the nut portion (7'') cooperating with correspondingly adjacently situated second complementary wedge-like ramp surfaces (29'') on the individual fixing parts (9''), the nut portion (7'') which is slidable by means of the adjusting screw (5) then pressing the fixing parts (9'') against the portions (31', 33') of the shorter edges (14) in the clamping position (Figure 3).

6. A version of the device claimed in Claim 3, characterized in that at least one of the fixing parts (9''') constructed as a clamping wedge is pivotable about an axis (47, 47''') extending in the direction of the shorter edge (14) and at least one further fixing part (9''') is pivotable about an axis (47, 47''') extending in the direction of the longer edge, first wedge-like ramp surfaces (23''') of the nut portion (7''') acting on second complementary wedge-like ramp surfaces (29''') of the fixing parts (9''') so that the fixing parts (9''') press, perpendicularly with respect to each other, against the shorter edge (14) and the longer edge (13) in at least two corners (51) of the opening (15) (Figure 4).

**Revendications**

1. Dispositif de fixation d'un appareil électrique, en particulier d'un autoradio ou d'un magnétophone à cassette, dans une ouverture d'une pièce d'un véhicule automobile, comme un tableau de bord, l'appareil électrique étant pourvu d'organes de fixation pouvant être déplacés ou réglés à partir de sa face avant, caractérisé en ce que les organes de fixation (9) bloquant l'appareil contre les bords (13, 14) délimitant l'ouverture et un dispositif de réglage central presse les organes de fixation (9) en sens opposé contre des segments (13, 31) des bords de l'ouverture opposés l'un à l'autre.

2. Dispositif suivant la revendication 1, destiné à une ouverture comportant deux bords courts et deux bords longs parallèles, caractérisé en ce que le dispositif de réglage central est constitué d'une vis de réglage (5) et d'une pièce formant écrou (7) prévue sur sa partie filetée, à laquelle des organes de fixation (9), guidés vers des segments opposés l'un à l'autre des longs bords de l'ouverture, sont articulés angulairement l'un à l'autre, de telle manière que leurs extrémités libres (19), en agrandissant leur angle inclus, soient pressées, dans la position de serrage, contre des segments (31, 33) des bords longs (13).

3. Dispositif suivant la revendication 1, destiné à une ouverture comportant deux bords courts et deux bords longs parallèles, caractérisé en ce que le dispositif de réglage central est constitué d'une vis de réglage (5) et d'une pièce formant écrou (7') prévue sur 'sa partie filetée, qui présente des surfaces de rampe cunéiformes (23) pour les organes de fixation (9, 9'') pouvant être amenés contre les segments opposés (13) des bords longs et/ou des bords courts.

4. Dispositif suivant la revendication 3, caractérisé en ce que les organes de fixation (9') sont des barrettes (9') pouvant coulisser perpendiculairement aux segments (31, 33) des bords longs (13) et qui présentent des surfaces de rampe cunéiformes (29) complémentaires des surfaces de rampe cunéiformes (23).

5. Dispositif suivant la revendication 3, caractérisé en ce que deux côtés de la vis de réglage (5) sont prévus des organes de fixation (9'') ayant la forme de coins qui peuvent pivoter autour d'un axe (47) s'étendant dans la direction des bords courts (14) et des surfaces de rampe cunéiformes (23'') disposées côte à côte sur l'écrou (7'') coopèrent avec des surfaces de rampe cunéiformes (29'') complémentaires et disposées l'une à côté de l'autre sur les organes de fixation (9'') individuels, de sorte que l'écrou (7'') pouvant être déplacé au moyen de la vis de réglage (5) presse les organes de fixation (9'') dans la position de serrage contre les segments (31', 33') des bords courts (14).

6. Dispositif suivant la revendication 3, caractérisé en ce qu'au moins un des organes de fixation (9''') ayant la forme d'un coin peut pivoter autour d'un axe (47, 47''') s'étendant dans la direction du bord court (14) et au moins un autre organe de fixation (9''') peut pivoter autour d'un axe s'étendant dans la direction du bord long et des surfaces de rampe cunéiformes (23''') de l'écrou (7''') attaquent des surfaces de rampe cunéiformes complémentaires (29''') des organes de fixation (9''') d'une manière telle que les organes de fixation (9''') soient pressés perpendiculairement l'un à l'autre dans au moins deux angles (51) de l'ouverture (15) contre le bord court (14) et le bord long (13), respectivement.

Fig.1

Fig.2

31  9'

3

23

27  7'

25  21  5  29  15

9'  14

33  13

1'

0 028 863

Fig.3

Fig.3a

Fig.4

Fig.4a

0 028 863